(19) Europäisches Patentamt
European Patent Office
Office européen des brevets

(11) **EP 2 919 963 B1**

(12) **FASCICULE DE BREVET EUROPEEN**

(45) Date de publication et mention
de la délivrance du brevet:
**26.10.2016 Bulletin 2016/43**

(21) Numéro de dépôt: **13803144.8**

(22) Date de dépôt: **13.11.2013**

(51) Int Cl.:
*B29C 49/06* (2006.01)   *B29C 49/12* (2006.01)
*B29C 49/18* (2006.01)   *B29C 49/48* (2006.01)
*B29C 49/54* (2006.01)   *B29C 49/62* (2006.01)
*B29C 49/70* (2006.01)   *B29C 49/78* (2006.01)
*B29L 31/00* (2006.01)   *B29K 67/00* (2006.01)

(86) Numéro de dépôt international:
**PCT/FR2013/052731**

(87) Numéro de publication internationale:
**WO 2014/076421 (22.05.2014 Gazette 2014/21)**

(54) **PROCÉDÉ DE FABRICATION DE RÉCIPIENTS, COMPRENANT UNE OPÉRATION RETARDÉE DE BOXAGE**

VERFAHREN ZUR HERSTELLUNG VON BEHÄLTERN MIT VERZÖGERTEM KARTONIERUNGSBETRIEB

METHOD FOR PRODUCING CONTAINERS, COMPRISING A DELAYED BOXING OPERATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2012 FR 1260993**

(43) Date de publication de la demande:
**23.09.2015 Bulletin 2015/39**

(73) Titulaire: **Sidel Participations**
**76930 Octeville sur Mer (FR)**

(72) Inventeurs:
• **DERRIEN, Mikael**
**F-76930 Octeville sur Mer (FR)**
• **PROTAIS, Pierrick**
**F-76930 Octeville sur Mer (FR)**

(74) Mandataire: **Siloret, Patrick et al**
**Sidel Blowing & Services**
**Avenue de la Patrouille de France**
**76930 Octeville-sur-Mer (FR)**

(56) Documents cités:
DE-U1-202011 109 976   GB-A- 2 141 662
JP-A- 2008 254 244   US-B1- 6 277 321

**Description**

L'invention a trait à la fabrication des récipients par soufflage d'ébauches en matière plastique tel que polyéthylène téréphtalate (PET).

Une technique classique de fabrication de récipients est le soufflage (éventuellement doublé d'un étirage). Cette technique consiste à introduire l'ébauche (i.e. une préforme ou un récipient intermédiaire ayant subi une opération de préformage), préalablement chauffée à une température supérieure à la température de transition vitreuse de la matière (environ 80°C dans le cas du PET), dans un moule muni d'une paroi définissant une cavité à l'empreinte du récipient, et à injecter dans l'ébauche, par le col, un fluide, tel qu'un gaz (généralement de l'air), sous pression pour plaquer la matière contre la paroi du moule.

Ordinairement, cette injection de fluide est réalisée en deux étapes, à savoir une première étape (dénommée présoufflage) à basse pression (généralement de 5 à 7 bars environ), suivie d'une deuxième étape (dénommée soufflage) à haute pression (généralement de 20 à 30 bars environ).

Pour les applications de remplissage à chaud, nécessitant que le récipient supporte de plus grandes contraintes thermiques, il est connu de réaliser un fond surétiré, destiné soit à absorber la déformation du récipient lors d'un remplissage à chaud, soit à mieux résister aux contraintes thermiques.

Pour obtenir un tel fond surétiré, on a habituellement recours à une unité de moulage équipée d'un fond de moule mobile initialement escamoté et déployé en cours de formage pour venir repousser la matière au niveau du fond, comme cela est illustré dans le brevet américain US 6 277 321 (SCHMALBACH-LUBECA).

Cette technique, couramment dénommée « boxage », est de mise en oeuvre assez délicate. En effet, un compromis doit être trouvé entre la volonté d'étirer la matière au-delà de sa forme finale afin d'accroître la prise d'empreinte du fond et la nécessité d'éviter que la matière ne fige avant d'avoir acquis sa forme finale. Bien que cette problématique soit explicitement exposée dans document précité, celui-ci reste cependant vague quant aux solutions permettant d'y remédier, se contentant de suggérer qu'il est préférable de limiter le délai entre la phase de présoufflage et la remontée du fond de moule.

En pratique, la manière dont est conduit le boxage a des conséquences directes sur la qualité et les performances du fond du récipient.

La modélisation théorique de la prise d'empreinte du fond, utile au paramétrage de la machine supposé permettre l'obtention de récipients conformes au cahier des charges, se fonde généralement sur l'hypothèse d'une remontée du fond de moule à vitesse constante (modèle linéaire).

Le modèle linéaire ne rend toutefois pas correctement compte de la réalité. En effet, compte tenu des variations de pression au sein du récipient, la résistance opposée par celui-ci à la remontée du fond de moule lors du boxage est également variable, ce qui entraîne une variation de la vitesse de déplacement du fond de moule.

On constate, dans ces conditions, non seulement que le fond de moule n'achève pas sa course à l'instant prévu par le modèle théorique, mais également que des différences apparaissent d'un moule à l'autre (et donc d'un récipient à l'autre), rendant difficile l'obtention de récipients identiques et conformes à un même cahier des charges.

En outre, on notera que, compte tenu de la position initiale abaissée du fond de moule, il existe un risque que de la matière surétirée radialement au-delà des limites du fond du récipient final se trouve pincée (et le cas échéant poinçonnée) lors de la remontée du fond de moule.

Les raisons qui viennent d'être exposées incitent, à juste titre, à anticiper le boxage par rapport au soufflage, c'est-à-dire à faire remonter le fond de moule avant d'injecter dans l'ébauche le fluide à haute pression. C'est d'ailleurs ce que préconise le document US 6 277 321 précité - sans toutefois pleinement le justifier.

En l'absence, à ce jour, de moyens d'observation directe de l'ébauche au cours du formage, le contrôle de la qualité du récipient obtenu, et la validation (ou la modification) des paramètres programmés dans la machine (notamment pression et débit de soufflage, instant de commande de déplacement du fond de moule), sont réalisés par des opérateurs suffisamment qualifiés et expérimentés pour apprécier visuellement et manuellement la qualité des récipients.

Toutefois, le contrôle humain, bien que nécessaire, est cependant trop long et subjectif pour permettre une programmation qui soit fiable, rapide et surtout extensible à l'ensemble d'un parc de machine. Les réglages étant à ce jour réalisés au jugé, il demeure souvent nécessaire, pour éviter l'accumulation de récipients non-conformes, de stopper la ligne de production.

L'invention vise à perfectionner les techniques de fabrication des récipients avec boxage, notamment pour en faciliter l'automatisation et améliorer la qualité et la constance des récipients.

A cet effet, l'invention propose un procédé de fabrication d'un récipient à partir d'une ébauche en matière plastique, au sein d'un moule muni d'une paroi définissant une cavité à l'empreinte du récipient, et d'un fond de moule mobile par rapport à la paroi entre une position rétractée dans laquelle il s'étend en retrait par rapport à la cavité, et une position déployée dans laquelle il ferme la cavité, ce procédé comprenant :

- une phase d'introduction de l'ébauche dans le moule ;
- une phase de présoufflage comprenant l'injection dans l'ébauche d'un fluide sous pression à une pression dite de présoufflage,

- une phase de soufflage, consécutive à la phase de présoufflage, et comprenant l'injection dans l'ébauche d'un fluide sous pression à une pression dite de soufflage supérieure à la pression de présoufflage ;
- une phase de boxage comprenant le déplacement du fond de moule de sa position rétractée vers sa position déployée, cette phase de boxage étant initiée pendant la phase de soufflage après que la pression dans l'ébauche a atteint la pression de soufflage.

De la sorte, le déplacement du fond de moule devient indépendant de la pression dans le récipient, puisque celle-ci est sensiblement constante. A consigne de déplacement constante, la vitesse de déplacement du fond de moule est par conséquent constante, de même que l'instant auquel le fond de moule atteint sa fin de course. L'automatisation du procédé est ainsi favorisée sans qu'il soit nécessaire de revoir la modélisation du boxage au moyen de modèles non linéaires, par nature complexes.

Diverses caractéristiques supplémentaires peuvent être prévues, seules ou en combinaison :

- il est prévu une opération de commande d'ouverture d'une électrovanne de boxage à un instant $t_{B1}$ tel que :

$$t_{B1} + \Delta t_B \geq t_{S3}$$

où :

   $\Delta t_B$ est le temps de réponse de l'électrovanne de boxage,
   $t_{S3}$ est l'instant à partir duquel la pression dans l'ébauche a atteint la pression de soufflage ;

- le fond de moule atteint sa position déployée à un instant $t_{B3}$ tel que :

$$t_{B3} \leq t_{D2}$$

où $t_{D2}$ est un instant à partir duquel intervient une dépressurisation au moins partielle de l'ébauche consécutivement à une mise de celle-ci en communication avec l'atmosphère ;
- la phase de dépressurisation comprend une étape de balayage pendant laquelle sont simultanément ouvertes l'électrovanne de dégazage et une électrovanne de balayage pour l'injection dans le récipient, par une tige d'étirage percée d'ouvertures, de fluide à la pression de soufflage
- la phase de dépressurisation comprend une opération de commande d'ouverture d'une électrovanne de dégazage pour la mise en communication de l'ébauche avec l'atmosphère, à un instant $t_{D1}$ tel que :

$$t_{D1} + \Delta t_D \geq t_{B3}$$

où $\Delta t_D$ est le temps de réponse de l'électrovanne de dégazage.
- la phase de dépressurisation est précédée d'une opération de fermeture d'une électrovanne de soufflage, à un instant $t_{S4}$, et d'une opération d'ouverture d'une électrovanne de balayage, à un instant $t_{BA1}$, tels que :

$$t_{S3} < t_{BA2} < t_{S5} < t_{D2}$$

où :

   $t_{BA2} = t_{BA1} + \Delta T_{BA}$
   $t_{S5} = t_{S4} + \Delta t_S$
   $t_{D2} = t_{D1} + \Delta t_D$
   $\Delta T_{BA}$ est le temps de réponse de l'électrovanne de balayage,
   $\Delta t_S$ est le temps de réponse de l'électrovanne de soufflage.

- la phase de dégazage comprend une étape de balayage pendant laquelle sont simultanément ouvertes l'électrovanne de dégazage et une électrovanne de balayage ;
- la phase de dépressurisation comprend une étape de dégazage pendant laquelle l'électrovanne de dégazage demeure ouverte tandis que l'électrovanne de balayage est fermée ;
- la phase de boxage se termine par le retrait du fond de moule depuis sa position haute vers sa position basse, initié à la fin de l'étape de dégazage ;
- le retrait du fond de moule est initié en même temps ou après qu'est initiée l'étape de dégazage.

D'autres objets et avantages de l'invention apparaîtront à la lumière de la description faite ci-après en référence aux dessins annexés dans lesquels :

- la figure 1 est une vue en coupe montrant un moule dans lequel a lieu le formage d'un récipient, montré à l'instant du début d'une opération de présoufflage ;
- la figure 2 est une vue similaire à la figure 1, à la fin de l'opération de présoufflage ;
- la figure 3 est une vue similaire à la figure 1, à la fin de l'opération de boxage ;
- la figure 4 est un diagramme sur lequel sont tracés parallèlement la position du fond de moule, la courbe des variations de la pression régnant dans l'ébauche puis le récipient formé à partir de celle-ci, et les chronogrammes de commande des opérations de présoufflage, soufflage, boxage, balayage, dégazage.

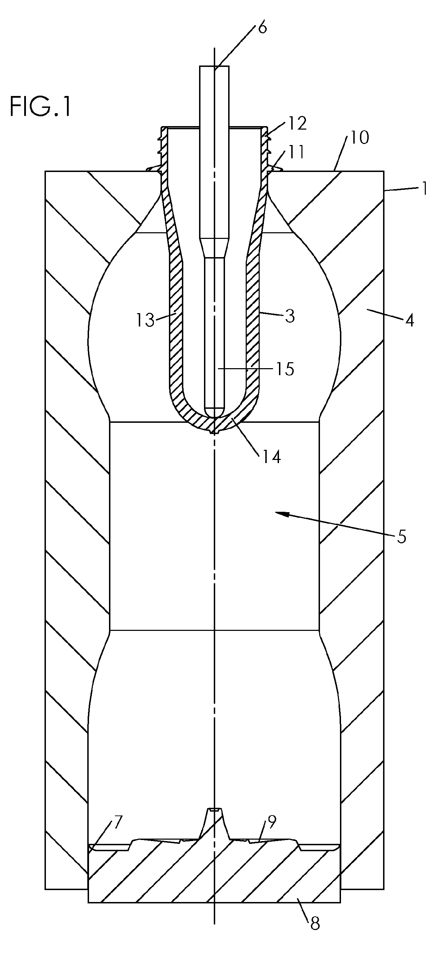

On a représenté sur les figures 1 à 3 un moule 1 pour la fabrication d'un récipient 2 par étirage soufflage à partir d'une ébauche 3 (en pratique, il s'agit généralement d'une préforme, obtenue par injection) en matière plastique.

Ce moule 1 comprend une paroi 4 définissant une cavité 5 interne répartie autour d'un axe 6 principal du moule qui, lorsque les récipients à former sont symétriques de révolution, forme un axe de symétrie du moule 1.

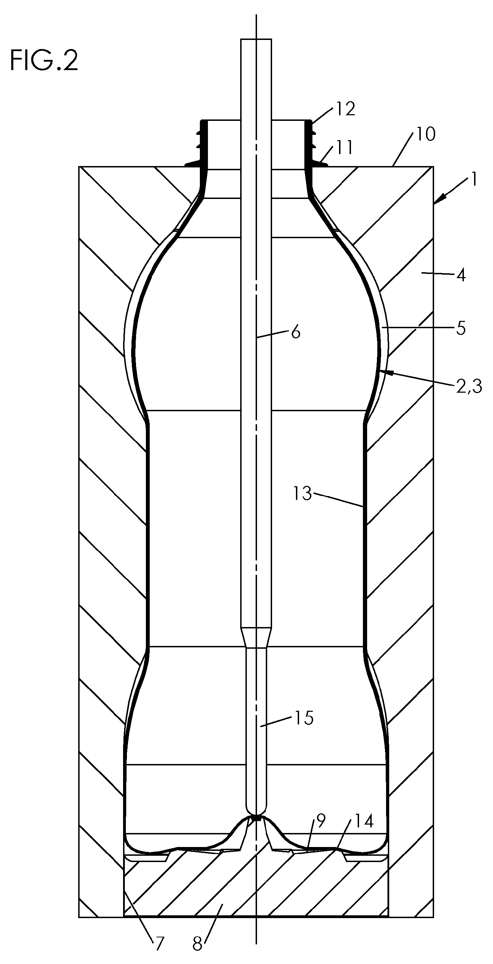

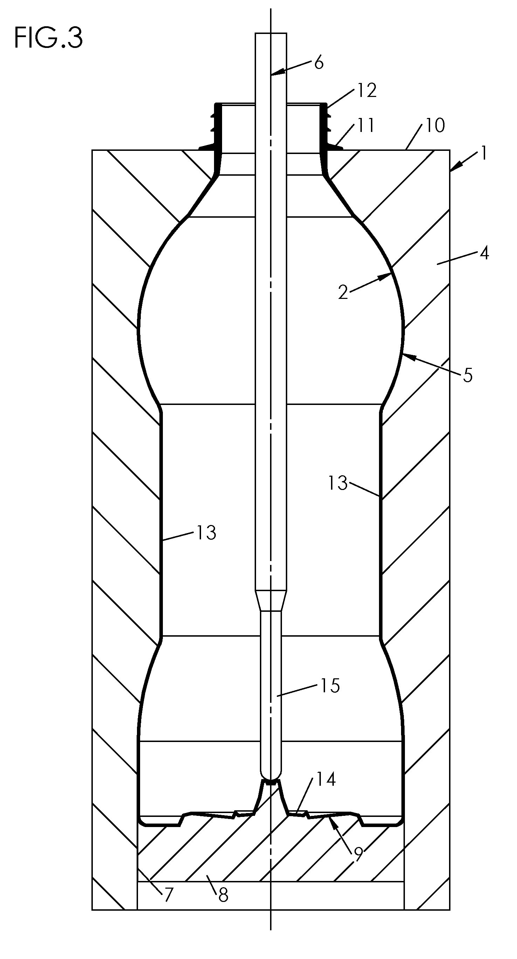

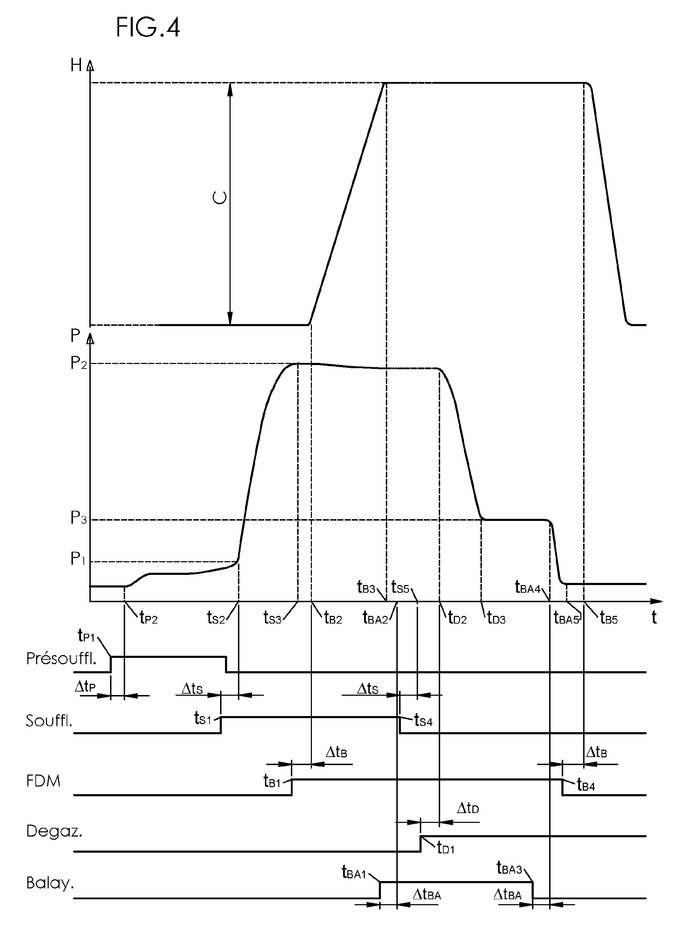

La cavité 5 définit partiellement une empreinte pour une paroi latérale ou corps du récipient 2. La paroi 4 présente, dans une partie inférieure, une ouverture 7 définissant un passage pour un fond 8 de moule monté mobile par rapport à la paroi 4 entre une position basse, illustrée sur les figures 1 et 2, dans laquelle le fond 8 de moule est écarté de l'ouverture 7 vers le bas, et une position haute, illustrée sur la figure 3, dans laquelle le fond 8 de moule obture l'ouverture 7. Le fond 8 de moule présente une surface 9 supérieure définissant une empreinte pour un fond du récipient 2. En position haute, le fond 8 de moule ferme la cavité 5, complétant ainsi l'empreinte du récipient 2, contre laquelle est appliquée la matière lors du soufflage. On appelle « course » du fond de moule, notée C sur la figure 4, la distance séparant sa position basse de sa position haute.

L'ébauche 3, puis le récipient 2 formé à partir de celle-ci, reposent sur une face 10 supérieure du moule 1 par l'intermédiaire d'une collerette 11 de l'ébauche 3 (respectivement du récipient 2), qui délimite un col 12 de l'ébauche 3 (respectivement du récipient 2), maintenu hors du moule 1.

Sous la collerette 11, l'ébauche 3 (puis le récipient 2) présente un corps 13, qui s'étend globalement suivant la direction axiale, et un fond 14, qui est d'abord hémisphérique (figure 1), puis, une fois formé contre le fond 8 de moule (figure 3), s'étend globalement suivant la direction radiale à partir d'une extrémité inférieure du corps 13.

Pour fabriquer le récipient 2 à partir d'une ébauche 3, on procède comme suit.

Le moule 1 étant dans sa configuration illustrée sur la figure 1, avec le fond 8 dans sa position basse, on y introduit l'ébauche 3 préalablement chauffée à une température supérieure à la température de transition vitreuse de la matière (environ 80°C dans le cas du PET).

On introduit alors dans l'ébauche 3, par le col 12, une tige 15 d'étirage mobile suivant la direction axiale ; dès que la tige 15 atteint le fond 14 de l'ébauche 3, on initie le présoufflage, en injectant dans l'ébauche 3 un fluide (notamment de l'air) à une pression P1 de présoufflage (inférieure à 15 bars, et par exemple de l'ordre de 5 à 7 bars). Selon un mode de réalisation préféré, la tige 15 est creuse et percée de trous qui s'ouvrent dans la cavité 5.

La vitesse d'étirage et le débit d'air sont tels que la tige 15 reste en contact avec le fond 14 de l'ébauche 3 tout au long du présoufflage.

Lorsque la tige 15 atteint le fond 8 de moule en y plaquant le fond 14 du récipient en formation (figure 2), le fond 8 de moule se trouve toujours dans sa position basse.

La pression P1 de présoufflage n'est pas suffisante pour plaquer la matière intimement contre la paroi 4 du moule 1, et il est nécessaire d'injecter dans le récipient 2 en formation une pression P2 de soufflage, supérieure à la pression P1 de présoufflage (en pratique la pression P2 de soufflage est égale ou supérieure à 15 bars, et par exemple de l'ordre de 20 à 30 bars).

Il se produit alors une montée brutale de la pression dans l'ébauche 3, jusqu'à ce que cette pression soit égale à la pression P2 de soufflage. Après une durée prédéterminée de maintien de la pression P2 de soufflage dans le récipient 2 ainsi formé, on dépressurise celui-ci en deux étapes.

Une première étape consiste à maintenir l'injection dans le récipient 2 de fluide à la pression P2 de soufflage par l'intermédiaire de l'électrovanne de balayage (l'électrovanne de soufflage étant fermée), tandis que le récipient est mis en communication avec l'atmosphère (c'est-à-dire l'air libre).

Cette étape, dite de balayage, permet de faire circuler le fluide dans le récipient 2 pour en figer la matière, tout en maintenant celle-ci au contact de la paroi 4 de sorte à la thermofixer. La pression dans le récipient 2 subit une première chute rapide jusqu'à se stabiliser à une valeur P3 intermédiaire entre la pression P1 de présoufflage et la pression P2 de soufflage.

Une deuxième étape, dite de dégazage, consiste à stopper l'injection par l'électrovanne de balayage, tout en maintenant la communication du récipient 2 avec l'atmosphère. La pression dans le récipient 2 subit alors une seconde chute rapide jusqu'à atteindre la pression atmosphérique.

Une opération de remontée du fond 8 de moule, dénommée boxage, est initiée pendant l'opération de soufflage, de manière à conférer à la matière du fond 14 un léger surétirage favorable à l'orientation des molécules (et donc à la rigidité) et à la prise d'empreinte sur la surface 9 supérieure du fond 8 de moule.

On a représenté sur la figure 4 les courbes représentant, en fonction du temps, noté t :

- en haut, la position axiale (ou hauteur, notée H) du fond 8 de moule,
- au milieu, la pression, notée P, régnant dans l'ébauche 3 (ou le récipient 2) en cours de formage ;
- en bas, les chronogrammes d'électrovannes de commande des phases de présoufflage (Présouffl.), de soufflage (Souffl.), de balayage (Balay.), de boxage - c'est-à-dire de déplacement du fond 8 de moule (FDM) - et de dégazage (Dégaz.).

Les courbes sont synchronisées sur l'axe de temps qui leur est commun, les traits pointillés verticaux permettant d'effectuer une mise en correspondance des courbes à certains instants choisis.

La commande d'ouverture de l'électrovanne de présoufflage est donnée à un instant $t_{P1}$ dénommé « top départ présoufflage ». L'électrovanne de présoufflage étant affectée d'un temps de réponse $\Delta t_P$, la pression P régnant dans le récipient **2** subit une montée à partir d'un instant $t_{P2}$ dénommé « départ réel présoufflage » tel que :

$$t_{P2} = t_{P1} + \Delta t_P$$

De même, la commande d'ouverture de l'électrovanne de soufflage est donnée à un instant $t_{S1}$ dénommé « top départ soufflage ». L'électrovanne de soufflage étant affectée d'un temps de réponse $\Delta t_S$, la pression P régnant dans le récipient **2** subit une inflexion (croissance subite) à un instant $t_{S2}$ dénommé « départ réel soufflage » tel que :

$$t_{S2} = t_{S1} + \Delta t_S$$

La pression P dans l'ébauche croît rapidement, à partir de l'instant $t_{S2}$ (où la pression P est environ égale à la valeur de la pression P1 de présoufflage), jusqu'à atteindre la valeur de la pression P2 de soufflage, qui correspond à la valeur maximale de la pression régnant dans le récipient pendant toute la durée du formage. On note $t_{S3}$ l'instant où la pression P atteint la valeur de la pression P2 de soufflage, c'est-à-dire l'instant à partir duquel la valeur de la pression P cesse de croître.

La commande d'ouverture de l'électrovanne de boxage commandant le déplacement du fond **8** de moule est donnée à un instant $t_{B1}$ dénommé « top départ boxage ». L'électrovanne de boxage étant affectée d'un temps de réponse $\Delta t_B$, le déplacement du fond **8** de moule à partir de sa position basse démarre à un instant $t_{B2}$ dénommé « départ réel boxage » tel que :

$$t_{B2} = t_{B1} + \Delta t_B$$

Comme nous l'avons déjà indiqué, et comme cela est visible sur la figure 4, le boxage est initié pendant le soufflage, après que la pression P dans l'ébauche **3** a atteint son maximum, c'est-à-dire la pression P2 de soufflage. En d'autres termes, on souhaite faire en sorte que le départ réel boxage $t_{B2}$ soit postérieur à l'instant $t_{S3}$ où la pression P dans l'ébauche **3** a atteint son maximum, soit :

$$t_{B2} \geq t_{S3}.$$

Bien que cela soit envisageable, il n'est pas nécessairement satisfaisant de commander le top départ boxage $t_{B2}$ après l'instant $t_{S3}$ où la pression P dans l'ébauche **3** atteint son maximum.

Il est en effet préférable, pour effectuer un réglage fin, de tenir compte du temps $\Delta t_B$ de réponse de l'électrovanne de boxage, qui est une donnée non réglable mais connue et fixe (à la dérive de ce temps $\Delta t_B$ de réponse près, que l'on peut compenser).

Ainsi, compte tenu de ce qui précède, pour initier le boxage après l'instant $t_{S3}$, il suffit de régler le top départ boxage $t_{B1}$ de manière que :

$$t_{B1} + \Delta t_B \geq t_{S3}$$

On note $t_{D2}$ l'instant de début de la phase de dépressurisation de l'ébauche **3**, lors de laquelle celle-ci est mise en communication avec l'atmosphère. Cet instant $t_{D2}$ inaugure d'étape de balayage, lors de laquelle la mise à l'air libre et l'injection de fluide sous pression de soufflage via l'électrovanne de balayage assurent une circulation de fluide dans le récipient **2**, favorable à son refroidissement et à sa prise d'empreinte tant sur son corps **13** que sur son fond **14**. Auparavant, comme illustré sur la figure 4, le soufflage a été arrêté par fermeture de l'électrovanne de soufflage à l'instant $t_{S4}$.

On note $t_{S4}$ l'instant auquel est commandée la fermeture de l'électrovanne de soufflage, et $t_{S5}$ l'instant auquel l'électrovanne de soufflage est effectivement fermée après sa commande de fermeture :

$$t_{S5} = t_{S4} + \Delta t_S$$

On note par ailleurs $t_{D1}$ l'instant auquel est commandée l'ouverture de l'électrovanne de dégazage pour la mise en communication du récipient avec l'atmosphère. L'électrovanne de dégazage étant affectée d'un temps de réponse $\Delta t_D$, on commande l'électrovanne de dégazage pour que l'instant, noté $t_{D2}$, auquel débute la dépressurisation dans le récipient, soit postérieur à l'instant $t_{S5}$ :

$$t_{D2} > t_{S5}$$

Lorsque le balayage est mis en oeuvre, la commande de l'électrovanne de balayage (affectée d'un temps de réponse $\Delta T_{BA}$), est mise en oeuvre à un instant $t_{BA1}$ tel que l'ouverture de l'électrovanne de balayage soit effective à un instant $t_{BA2}$ (où $t_{BA2} = t_{BA1} + \Delta T_{BA}$) certes postérieur à l'instant $t_{S3}$, mais antérieur à l'instant $t_{S5}$, de sorte à maintenir la pression dans le récipient avant que ne soit initiée la dépressurisation :

$$t_{S3} < t_{BA2}$$

$$t_{BA2} < t_{S5}$$

De sorte que :

$$t_{S3} < t_{BA2} < t_{S5} < t_{D2}$$

Une fois la dépressurisation amorcée, la pression dans le récipient **2** chute rapidement jusqu'à se stabiliser à la valeur P3 intermédiaire. On note $t_{D3}$ l'instant à partir duquel la pression P dans le récipient **2** atteint la pression P3 intermédiaire (dénommée pression de balayage et dépendant de la valeur de la pression P2 de soufflage et des débits des électrovannes de soufflage et de dégazage).

La fermeture de l'électrovanne de balayage est commandée à un instant noté $t_{BA3}$. Compte tenu du temps $\Delta t_{BA}$ de réponse de l'électrovanne de balayage, le fluide à la pression P2 de soufflage cesse d'être injecté dans le récipient **2** à un instant noté $t_{BA4}$ tel que :

$$t_{BA3} + \Delta t_{BA} = t_{BA4}$$

A partir de cet instant $t_{BA4}$, débute l'étape de dégazage lors de laquelle la pression P dans le récipient **2** subit une nouvelle chute, atteignant la pression atmosphérique et se stabilisant à celle-ci.

On note par ailleurs $t_{B3}$ l'instant où le fond de moule atteint sa position déployée (c'est-à-dire sa fin de course). Selon un mode de réalisation préféré, illustré sur la figure 4, cet instant $t_{B3}$ est inférieur à l'instant $t_{D2}$ de début de la phase de dégazage :

$$t_{B3} \leq t_{D2}$$

En d'autres termes, la phase de boxage est achevée au plus tard à la fin de la phase de soufflage (c'est-à-dire avant le commencement de l'étape de dégazage à l'instant $t_{D2}$). Compte tenu du temps $\Delta t_D$ de réponse de l'électrovanne de dégazage, l'instant $t_{D1}$ auquel est commandée l'ouverture de l'électrovanne de dégazage est choisi tel que :

$$t_{D2} = t_{D1} + \Delta t_D \geq t_{B3}$$

La phase de boxage se termine par le retrait du fond **8** de moule depuis sa position haute vers sa position basse. Ce retrait est commandé à un instant noté $t_{B4}$ et initié effectivement à partir d'un instant noté $t_{B5}$ tel que :

$$t_{B4} + \Delta t_B = t_{B5}$$

Ce retrait est de préférence initié au plus tôt à la fin de l'étape de balayage, et éventuellement pendant le dégazage. En d'autres termes, si l'on note $t_{BA5}$ l'instant à partir duquel la pression dans le récipient est égale à la pression atmosphérique :

$$t_{B5} \geq t_{BA5}$$

La pression P dans le récipient **2** ayant atteint sa valeur maximale (c'est-à-dire la pression P2 de soufflage) avant que soit initié le boxage, les efforts s'exerçant sur le fond **8** de moule dans le récipient **2** et s'opposant à la remontée du fond **8** lors du boxage, n'augmentent pas pendant le boxage. Il n'est donc pas nécessaire d'augmenter les efforts s'exerçant sur le fond **8** de moule pour poursuivre son déplacement.

En outre, la phase d'augmentation brutale de la pression dans le récipient ayant déjà été achevée, la matière de l'ébauche **2** a pour l'essentiel atteint le fond **8** de moule (sur la surface **9** supérieure de laquelle elle est maintenue centrée par la tige **15**), et les incertitudes de forme liées à d'éventuels glissements de la matière pendant la phase de boxage sont limitées. Il en résulte une plus grande constance dans la qualité des récipients produits.

Lorsque le boxage est réalisé de manière que le fond **8** de moule atteigne sa position haute avant la fin du soufflage, la vitesse de déplacement du fond **8** de moule est sensiblement constante pendant tout le boxage. Cette linéarité est rendue par la courbe de déplacement du fond de moule sur la figure 4, entre les instants $t_{B2}$ et $t_{B3}$. Il en résulte une meilleure prévisibilité du mouvement du fond **8** de moule, et donc de la prise d'empreinte du fond **14** du récipient **2**.

Le procédé qui vient d'être décrit ne convient pas à tous les moules ; il convient, en particulier à un moule (tel que celui illustré sur les dessins ci-joints) dans lequel les problèmes du pincement de matière entre la paroi du moule et le fond de moule en position basse ou ceux dus à une course de boxage faible par rapport aux besoins que nécessite la dite forme ne se posent pas.

## Revendications

1.　Procédé de fabrication d'un récipient (**2**) à partir d'une ébauche (**3**) en matière plastique, au sein d'un moule (**1**) muni d'une paroi (**4**) définissant une cavité (**5**) à l'empreinte du récipient (**2**), et d'un fond (**8**) de moule mobile par rapport à la paroi entre une position rétractée dans laquelle il s'étend en retrait par rapport à la cavité (**5**), et une position déployée dans laquelle il ferme la cavité (**5**), ce procédé comprenant :

- une phase d'introduction de l'ébauche (**3**) dans le moule ;
- une phase de présoufflage comprenant l'injection dans l'ébauche (**3**) d'un fluide sous pression à une pression dite de présoufflage,
- une phase de soufflage, consécutive à la phase de présoufflage, et comprenant l'injection dans l'ébauche (**3**) d'un fluide sous pression à une pression dite de soufflage supérieure à la pression de présoufflage ;
- une phase de boxage comprenant le déplacement du fond (**8**) de moule de sa position rétractée vers sa position déployée ;

ce procédé étant **caractérisé en ce que** la phase de boxage (**3**) est initiée pendant la phase de soufflage après que la pression dans l'ébauche (**3**) a atteint la pression de soufflage.

2.  Procédé selon la revendication 1, **caractérisé en ce qu'**il comprend une opération de commande d'ouverture d'une électrovanne de boxage pour le déplacement du fond (**8**) de moule, à un instant $t_{B1}$ tel que :

$$t_{B1} + \Delta t_B \geq t_{S3}$$

où :

$\Delta t_B$ est le temps de réponse de l'électrovanne de boxage,
$t_{S3}$ est l'instant à partir duquel la pression dans l'ébauche (**3**) a atteint la pression de soufflage.

3.  Procédé selon la revendication 2, **caractérisé en ce que** la phase de boxage est conduite de telle sorte que le fond (**8**) de moule atteint sa position déployée à un instant $t_{B3}$ tel que :

$$t_{B3} \leq t_{D2}$$

où $t_{D2}$ est un instant à partir duquel débute une phase de dépressurisation au moins partielle de l'ébauche (**3**) consécutive à une mise de celle-ci en communication avec l'atmosphère.

4.  Procédé selon la revendication 3, caractérisé en ce la phase de dépressurisation comprend une opération de commande d'ouverture d'une électrovanne de dégazage pour la mise en communication de l'ébauche (3) avec l'atmosphère, à un instant $t_{D1}$ tel que :

$$t_{D1} + \Delta t_D \geq t_{B3}$$

où $\Delta t_D$ est le temps de réponse de l'électrovanne de dégazage.

5.  Procédé selon la revendication 4, **caractérisé en ce que** la phase de dépressurisation comprend une étape de balayage pendant laquelle sont simultanément ouvertes l'électrovanne de dégazage et une électrovanne de balayage pour l'injection dans le récipient, par une tige d'étirage percée d'ouvertures, de fluide à la pression de soufflage.

6.  Procédé selon l'une des revendications 4 ou 5, **caractérisé en ce que** la phase de dépressurisation est précédée d'une opération de fermeture d'une électrovanne de soufflage, à un instant $t_{S4}$, et d'une opération d'ouverture d'une électrovanne de balayage, à un instant $t_{BA1}$, tels que :

$$t_{S3} < t_{BA2} < t_{S5} < t_{D2}$$

où :

$t_{BA2} = t_{BA1} + \Delta T_{BA}$
$t_{S5} = t_{S4} + \Delta t_S$
$t_{D2} = t_{D1} + \Delta t_D$
$\Delta T_{BA}$ est le temps de réponse de l'électrovanne de balayage,
$\Delta t_S$ est le temps de réponse de l'électrovanne de soufflage.

7.  Procédé selon la revendication 4 ou la revendication 5, **caractérisé en ce que** la phase de dépressurisation comprend une étape de dégazage pendant laquelle l'électrovanne de dégazage demeure ouverte tandis que l'électrovanne de balayage est fermée.

8.  Procédé selon la revendication 7, **caractérisé en ce que** la phase de boxage se termine par le retrait du fond (**8**) de moule depuis sa position haute vers sa position basse, initié à la fin de l'étape de dégazage.

9.  Procédé selon la revendication 8, **caractérisé en ce que** le retrait du fond (**8**) de moule est initié en même temps ou après qu'est initiée l'étape de dégazage.

**Patentansprüche**

1.  Verfahren zum Herstellen eines Behälters (2) anhand eines Rohlings (3) aus Kunststoff in einer Gießform (1), die versehen ist mit einer Wand (4), die im Formraum des Behälters (2) einen Hohlraum (5) definiert, und mit einem Gießformboden (8), der in Bezug auf die Wand zwischen einer zurückgezogenen Position, in der er sich vom Hohlraum (5) zurückversetzt erstreckt, und einer ausgefahrenen Position, in der er den Hohlraum (5) verschließt, beweglich ist, wobei dieses Verfahren Folgendes umfasst:

- eine Phase des Einführens des Rohlings (3) in die Gießform;
- eine Vorblasphase, die das Einspritzen in den Rohling (3) eines mit Druck beaufschlagten Fluids auf einem sogenannten Vorblasdruck enthält,
- eine Blasphase, die auf die Vorblasphase folgt und das Einspritzen in den Rohling (3) eines mit Druck beaufschlagten Fluids auf einem sogenannten Blasdruck, der höher als der Vorblasdruck ist, enthält;
- eine Verschlussphase, die die Verlagerung des Gießformbodens (8) aus seiner zurückgezogenen Position in seine ausgefahrene Position enthält;

wobei dieses Verfahren **dadurch gekennzeichnet ist, dass** die Verschlussphase (3) während der Blasphase eingeleitet wird, nachdem der Druck in dem Rohling (3) den Blasdruck erreicht hat.

2. Verfahren nach Anspruch 1, **dadurch gekennzeichnet, dass** es einen Betrieb des Steuerns des Öffnens eines Verschluss-Elektroventils für die Verlagerung des Gießformbodens (8) zu einem Zeitpunkt $t_{B1}$ umfasst, derart, dass:

$$t_{B1} + \Delta t_B \geq t_{S3},$$

wobei:

$\Delta t_B$ die Ansprechzeit des Verschluss-Elektroventils ist,

$t_{S3}$ der Zeitpunkt ist, ab dem der Druck in dem Rohling (3) den Blasdruck erreicht hat.

3. Verfahren nach Anspruch 2, **dadurch gekennzeichnet, dass** die Verschlussphase in der Weise ausgeführt wird, dass der Gießformboden (8) seine ausgefahrene Position zu einem Zeitpunkt $t_{B3}$ erreicht, derart, dass:

$$t_{B3} \leq t_{D2},$$

wobei $t_{D2}$ ein Zeitpunkt ist, ab dem eine Phase einer wenigstens teilweisen Druckentlastung des Rohlings (3) beginnt, die auf die Herstellung einer Kommunikation zwischen ihm und der Atmosphäre folgt.

4. Verfahren nach Anspruch 3, **dadurch gekennzeichnet, dass** die Druckentlastungsphase einen Betrieb des Steuerns des Öffnens eines Entgasungs-Elektroventils für die Herstellung einer Kommunikation zwischen dem Rohling (3) und der Atmosphäre zu einem Zeitpunkt $t_{D1}$ umfasst, derart, dass:

$$t_{D1} + \Delta t_D \geq t_{B3},$$

wobei $\Delta t_D$ die Ansprechzeit des Entgasungs-Elektroventils ist.

5. Verfahren nach Anspruch 4, **dadurch gekennzeichnet, dass** die Druckentlastungsphase einen Spülschritt umfasst, währenddessen das Entgasungs-Elektroventil und ein Spül-Elektroventil zur Einleitung eines Fluids auf dem Blasdruck in den Behälter durch einen mit Öffnungen durchsetzten Ziehstift gleichzeitig geöffnet werden.

6. Verfahren nach einem der Ansprüche 4 oder 5, **dadurch gekennzeichnet, dass** der Druckentlastungsphase ein Betrieb des Schließens eines Blas-Elektroventils zu einem Zeitpunkt $t_{S4}$ und ein Betrieb des Öffnens eines Spül-Elektroventils zu einem Zeitpunkt $t_{BA1}$ vorhergehen, derart, dass:

$$t_{S3} < t_{BA2} < t_{S5} < t_{D2},$$

wobei:

$t_{BA2} = t_{BA1} + \Delta t_{BA}$
$t_{S5} = t_{S4} + \Delta t_S$
$t_{D2} = t_{D1} + \Delta t_D$
$\Delta t_{BA}$ die Ansprechzeit des Spül-Elektroventils ist und
$\Delta t_S$ die Ansprechzeit des Blas-Elektroventils ist.

7. Verfahren nach Anspruch 4 oder Anspruch 5, **dadurch gekennzeichnet, dass** die Druckentlastungsphase einen Entgasungsschritt umfasst, währenddessen das Entgasungs-Elektroventil sich öffnet, während das Spül-Elektroventil geschlossen ist.

8. Verfahren nach Anspruch 7, **dadurch gekennzeichnet, dass** die Verschlussphase durch Zurückziehen des Gießformbodens (8) aus seiner oberen Position in seine untere Position, das am Ende des Entgasungsschrittes eingeleitet wird, beendet wird.

9. Verfahren nach Anspruch 8, **dadurch gekennzeichnet, dass** das Zurückziehen des Gießformbodens (8) gleichzeitig mit oder nach dem Einleiten der Entgasungsphase eingeleitet wird.

## Claims

1. Method for manufacturing a container (2) from a plastic preform (3) in a mould (1) provided with a wall (4) defining a cavity (5) that is the impression of the container (2), and with a mould bottom (8) able to move with respect to the wall between a retracted position in which it extends set back from the cavity (5) and a deployed position in which it closes the cavity (5), this method comprising:

   - a phase of introducing the preform (3) into the mould;
   - a pre-blowing phase involving injecting a pressurized fluid into the preform (3) at pressure referred to as the pre-blowing pressure,
   - a blowing phase, after the pre-blowing phase and involving injecting a pressurized fluid into the preform (3) at a pressure referred to as the blowing pressure that is higher than the pre-blowing pressure;
   - a boxing phase that involves moving the mould bottom (8) from its retracted position towards its deployed position;

   this method being **characterized in that** the boxing phase (3) is initiated during the blow-moulding phase after the pressure in the preform (3) has reached the blowing pressure.

2. Method according to Claim 1, **characterized in that** it involves an operation of commanding the opening of a boxing electrovalve in order to move the mould bottom (8), at an instant $t_{B1}$ such that:

$$t_{B1} + \Delta t_B \geq t_{S3}$$

   where:

   $\Delta t_B$ is the response time of the boxing electrovalve,
   $ts_3$ is the moment beyond which the pressure in the preform (3) has reached the blow-moulding pressure.

3. Method according to Claim 2, **characterized in that** the boxing phase is conducted in such a way that the mould bottom (8) reaches its deployed position at an instant $t_{B3}$ such that:

$$t_{B3} \leq t_{D2}$$

   where $t_{D2}$ is an instant beyond which an at least partial depressurization of the preform (3) begins following the latter being placed in communication with the atmosphere.

4. Method according to Claim 3, **characterized in that** the depressurization phase involves an operation of commanding the opening of a degassing electrovalve in order to place the preform (3) in communication with the atmosphere at an instant $t_{D1}$ such that:

$$t_{D1} + \Delta t_D \geq t_{B3}$$

   where $\Delta t_D$ is the response time of the degassing electrovalve.

5. Method according to Claim 4, **characterized in that** the depressurization phase involves a flushing step during which the degassing electrovalve and a flushing electrovalve are simultaneously opened so that fluid at the blow-moulding pressure can be injected into the container by a blow-moulding rod pierced with openings.

6. Method according to one of Claims 4 and 5, **characterized in that** the depressurization phase is preceded by an operation of closing a blow-moulding electrovalve, at an instant $t_{S4}$, and by an operation of opening a flushing electrovalve, at an instant $T_{BA1}$, which instants are such that:

$$t_{S3} < t_{BA2} < t_{S5} < t_{D2}$$

   where:

   $t_{BA2} = t_{BA1} + \Delta t_{BA}$
   $t_{S5} = t_{S4} + \Delta t_S$
   $t_{D2} = t_{D1} + \Delta t_D$
   $\Delta T_{BA}$ is the response time of the flushing electrovalve,
   $\Delta t_S$ is the response time of the blow-moulding electrovalve.

7. Method according to Claim 4 or Claim 5, **characterized in that** the depressurization phase involves a degassing step during which the degassing electrovalve remains open while the flushing electrovalve is closed.

8. Method according to Claim 7, **characterized in that** the boxing phase ends with the withdrawal of the mould bottom (8) from its raised position to its lowered position which withdrawal is initiated at the end of the degassing step.

9. Method according to claim 8, **characterized in that** withdrawal of the mould bottom (8) is initiated at the same time as or after the initiation of the degassing step.

FIG.1

FIG.2

FIG.3

## FIG.4

**EP 2 919 963 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6277321 B